Europäisches Patentamt

European Patent Office

Office européen des brevets

(19)

(11) Veröffentlichungsnummer: **0 477 696 A1**

# EUROPÄISCHE PATENTANMELDUNG

(12)

(21) Anmeldenummer: **91115525.7**

(51) Int. Cl.⁵: **B65G  69/00**

(22) Anmeldetag: **13.09.91**

(30) Priorität: **25.09.90 DE 4030265**

(43) Veröffentlichungstag der Anmeldung:
**01.04.92 Patentblatt  92/14**

(84) Benannte Vertragsstaaten:
**AT BE CH DE DK ES FR GB IT LI NL SE**

(71) Anmelder: **Alten, Kurt**
**Ringstrasse 14**
**W-3015 Wennigsen(DE)**

(72) Erfinder: **Alten, Kurt**
**Ringstrasse 14**
**W-3015 Wennigsen(DE)**

(74) Vertreter: **Depmeyer, Lothar**
**Auf der Höchte 30**
**W-3008 Garbsen 1(DE)**

(54) **Verformbare Dichtung des Spaltes zwischen dem Rand einer Gebäudeöffnung und dem Heck eines an diese herangefahrenen Fahrzeuges.**

(57) Die Erfindung geht aus von einer Dichtung der obigen Art, bei der der Raum zwischen der vorne liegenden verformbaren Schürze der Dichtung und dem Gebäude eine Dachplane angeordnet ist. Um diese Dachplane sicher und wasserdicht am Gebäude befestigen zu können, ist zur Befestigung der Planenränder ein Metallprofil vorgesehen, das im wesentlichen winkelförmig gestaltet ist und mit einem Schenkel (10) dicht am Gebäude anliegt. Der andere Schenkel (11) verläuft im wesentlichen waagerecht und hat eine zum Gebäude hin offene Tasche (14), die zur Aufnahme einer Randverdickung der Plane (7) dient.

Fig. 1

EP 0 477 696 A1

Die Erfindung betrifft eine verformbare Dichtung nach dem Oberbegriff des Anspruchs 1.

Ihr liegt im wesentlichen die Aufgabe zugrunde, eine Vorrichtung zur Wandbefestigung der Dachplane ggfs. auch der Seitenplanen der Dichtung vorzuschlagen, die eine gute Abdichtung gegenüber der Wand ermöglicht, eine lösbare Befestigung der Planen gestattet und zudem bei waagerechter Anordnung der Planen eine Regenrinne bilden kann.

Zur Lösung dieser Aufgabe ist erfindungsgemäss eine Vorrichtung vorgesehen, die sich durch ein Metallprofil, insb. ein aus einem Metallblech geformtes Profil auszeichnet mit einem zur Anlage an der Wandung des Gebäudes dienenden, von der Gebäudeöffnung her gesehen nach aussen gerichteten Schenkel zur Aufnahme von Befestigungsschrauben und einer am freien Ende befindlichen Nut zur Aufnahme einer am Gebäude anliegenden Dichtungsschnur und einem im Winkel zum ersten Schenkel angeordneten zweiten Schenkel, der von der Gebäudeöffnung her gesehen nach aussen abgewinkelt oder abgebogen ist unter Bildung einer Tasche, die eine Randverdickung der Plane aufnimmt.

Der eine Schenkel dient dabei der Wandbefestigung und der Abdichtung durch die genannte Dichtungsschnur, während der zweite Schenkel zur lösbaren Aufnahme der verdickten Ränder der Planen dient, zugleich aber auch durch seine Abwinkelung oder Abbiegung nach aussen eine Regenrinne bildet.

Zweckmässigerweise bilden die beiden Schenkel ein Winkelprofil mit den erwähnten Ausbildungen an den Schenkelenden. Zudem wird die Randverdickung der Planen zweckmässigerweise von einer im Vergleich zur Plane steifen Leiste, die auf die Ränder der Plane aufgebracht z.B. dort angehaftet sein kann, ggfs. aber in einer Tasche der Plane untergebracht sein kann, geformt.

Weitere Einzelheiten der Erfindung werden anhand der Zeichnung erläutert, in der ein Ausführungsbeispiel der Erfindung dargestellt ist.

Es zeigen :

Fig. 1 die rechte Hälfte einer verformbaren Dichtung zur Abdichtung des Spaltes zwischen dem Rand einer Gebäudeöffnung und dem Heck eines an diese herangefahrenen Fahrzeuges in schaubildlicher Darstellung und

Fig. 2 einen Teilschnitt nach der Linie II - II von Fig. 2.

Die Gebäudeöffnung 1 eines Lagerhauses od dgl. mit der Wandung 2 kann in der Regel durch ein nicht dargestelltes Tor z.B ein Sektionaltor verschlossen werden. Vor dieser Gebäudeöffnung 1 befindet sich die verformbare Dichtung der eingangs erwähnten Art, die den Spalt zwischen dem Heck eines andockenden Fahrzeuges und dem Rand der Gebäudeöffnung 1 überbrücken soll.

Deshalb ist im Abstand von der Wandung 2 eine verformbare Schürze angeordnet, die aus einem oben gelegenen Querteil 3 und zwei zu beiden Seiten der Gebäudeöffnung 1 befindlichen senkrechten Streifen 4 besteht. Die Teile 3, 4 sind folienartig verformbar und bestehen aus Gewebe mit einem Auftrag aus Gummi od. dgl.

Das Querteil 3 ist gardinenartig an einem Querträger 5 aufgehängt, dessen Enden von Wandträgern 6 unterfangen sind. Vom Querträger 5 aus erstreckt sich eine verformbare Dachplane 7 nach hinten, die wandseitig aufgrund der Erfindung befestigt werden soll.

Die senkrechten Streifen 4 sind hingegen von in Richtung auf das Gebäude elastisch nachgiebigen Tragkörpern 8 gehalten. Anstelle dieser elastischen Tragkörper 8 können aber auch bei einer geeigneten Halterung für die Streifen 4 der Dachplane 7 entsprechende Seitenplanen vorgesehen werden, die dann den Dachplanen 7 entsprechend an der Wandung 2 befestigt werden müssten.

Im Bereich der Wandträger 6 können die Dachplanen 7 mit einem Überhang 9 versehen sein, der das obere Ende der Tragkörper 8 überdeckt.

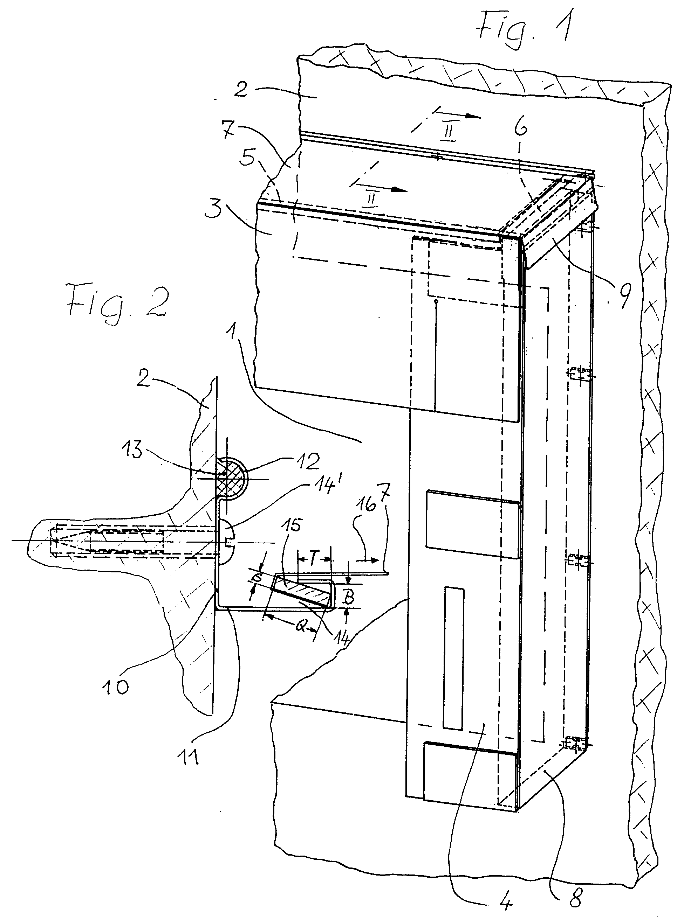

Die Vorrichtung zur Halterung des gebäudeseitigen Randes der Dachplane 7 ist aus Fig. 2 gut erkennbar. Vorgesehen ist ein aus Stahlblech od. dgl. bestehendes Profil mit einem nach oben gerichteten Schenkel 1o und einem vom Gebäude abstehenden Schenkel 11 am unteren Ende des Schenkels 1o.

Am oberen Rand ist der Schenkel 1o mit einer zum Gebäude hin offenen, ausgerundeten Nut 12 zur Aufnahme einer Dichtungsschnur aus Gummi od. dgl. versehen, die mit 13 bezeichnet ist. Zur Befestigung dienen diesen Schenkel durchsetzende Dübelschrauben 14'. Vom unteren Ende des Schenkels 1o erstreckt sich der waagerechte Schenkel 11, der am freien Ende nach oben gebogen ist unter Bildung einer zum Gebäude hin offenen, im Querschnitt im wesentlichen rechteckigen Tasche 14, deren Breite B ( Lichtes Innenmass ) etwa halb so gross ist die lichte Tiefe T. Um die Dachplane 7 mit Hilfe dieser Tasche 14 gebäudeseitig befestigen zu können, ist der Dachplanenrand mit einem festen rechteckigen Stab 15 versehen, der haftend angeordnet ist. Diese Randverdickung hat eine Stärke S , die wesentlich kleiner ist als die Breite B, jedoch hat der Stab 15 eine Quererstreckung Q, die wesentlich grösser ist als die Tiefe T. Damit ist der Stab 15 mit dem Planenrand kippsicher innerhalb der Nut 14 angeordnet. Bei Zugeinwirkung in Richtung der Dachplane 7 bzw. in Richtung des Pfeiles 16 kann somit die Verbindung nicht aufgehoben werden; der Planenrand ist also fest verankert. Ebenso wie der Planenrand in die Tasche 14 eingeführt werden kann, ist auch ein Lösen möglich, indem ein Zug gegen die Pfeilrichtung 16 aufgebracht und dann der Stab 15 aus der Tasche 14 herausgewinkelt werden kann.

Das Vorhandensein der zum Gebäude hin offenen Tasche 14 hat noch den grossen Vorteil, dass das Profil zugleich als Dachrinne wirkt, in der z.B. das Regenwasser besonders günstig dann aufgefangen werden kann, wenn die Dachplane 7 ein Gefälle zur Wandung 2 erhält.

**Patentansprüche**

1. Verformbare Dichtung des Spaltes zwischen dem Rand einer Gebäudeöffnung und dem Heck eines an diese herangefahrenen Fahrzeuges mit einer verformbaren Schürze aus zwei zu beiden Seiten der Gebäudeöffnung angeordneten, senkrechten Schürzen und einem im Bereich der oberen Streifenenden befindlichen Querteil, das an einem Querträger aufgehängt ist, von dem aus sich eine gebäudeseitig befestigte Dachplane erstreckt, wobei ggfs. von den seitlich aussen gelegenen Rändern zum Gebäude geführte, randseitig am Gebäude befestigte Seitenplanen vorgesehen sind, dadurch gekennzeichnet, dass zur Befestigung der gebäudeseitigen Ränder der Planen ein Metallprofil vorgesehen ist mit einem zur Wandanlage dienenden, von der Gebäudeöffnung (1) gesehen sich nach aussen erstreckenden Schenke (1o) zur Aufnahme von Befestigungsschrauben (14') und einer am freien Ende befindlichen Nut (12) zur Aufnahme einer am Gebäude (2) anliegenden Dichtungsschnur (13) und einem im Winkel zum ersten Schenkel (1o) verlaufenden Schenkel (11), der vorne von der Gebäudeöffnung (1) gesehen nach aussen abgewinkelt oder abgebogen ist unter Bildung einer zum Gebäude hin offenen Tasche (14) zur Aufnahme einer Randverdickung (15) der Planen (7).

2. Dichtung nach Anspruch 1, dadurch gekennzeichnet, dass das Metallprofil ein aus Metallblech gebogenes Profil ist.

3. Dichtung nach Anspruch 1, dadurch gekennzeichnet, dass das Profil zur Befestigung der Dachplane (7) dient und dass der eine Schenkel (1o) sich nach oben und der andere Schenkel (11) waagerecht erstreckt.

4. Dichtung nach Anspruch 1, dadurch gekennzeichnet, dass die Breite (B) der Tasche (14) grösser ist als die Wandstärke der Randverdickung (15) und dass die Tiefe (T) der Tasche (14) kleiner ist als die Breitenerstreckung (Q) der Randverdickung (15).

5. Dichtung nach Anspruch 1 und 4, dadurch gekennzeichnet, dass die Planen (7) an dem aus der Tasche (14) herausragenden Teil der Randverdickung (15) angreifen und die Randverdickung (15) kippsicher ggfs. mit einer Schrägstellung gegenüber dem zugehörigen Schenkel (11) angeordnet ist.

6. Dichtung nach Anspruch 1, dadurch gekennzeichnet, dass die Randverdickung von einer haftend oder in einer Schlaufe der Plane (7) angeordneten steifen Leiste (15) gebildet ist.

7. Dichtung nach Anspruch 1, dadurch gekennzeichnet, dass bei der Randbefestigung einer Dachplane (7) diese mit Gefälle zum Gebäude (2) hin verläuft.

8. Dichtung nach Anspruch 4, dadurch gekennzeichnet, dass die Breite (B) etwa dem halben Mass der Tiefe (T) entspricht.

9. Dichtung nach Anspruch 1 und 4, dadurch gekennzeichnet, dass der Taschenrand mit einem solchen Abstand von dem gegenüberliegenden Schenkel (1o angeordnet ist, dass die Randverdickung durch eine quer zur Randverdickung gerichtete Montagebewegung montierbar bzw. demontierbar ist.

Fig. 1

Fig. 2

Europäisches
Patentamt

# EUROPÄISCHER RECHERCHENBERICHT

## EINSCHLÄGIGE DOKUMENTE

EP 91115525.7

| Kategorie | Kennzeichnung des Dokuments mit Angabe, soweit erforderlich, der maßgeblichen Teile | Betrifft Anspruch | KLASSIFIKATION DER ANMELDUNG (Int CI⁵) |
|---|---|---|---|
| A | US - A - 3 403 489 (FROMMELT et al.) * Fig. 5 * ---- | 1 | B 65 G 69/00 |

|  |
|---|
| RECHERCHIERTE SACHGEBIETE (Int CI⁵) |
| B 65 G E 06 B |

Der vorliegende Recherchenbericht wurde für alle Patentansprüche erstellt.

| Recherchenort | Abschlußdatum der Recherche | Prüfer |
|---|---|---|
| WIEN | 29-11-1991 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82